# EUROPEAN PATENT SPECIFICATION

(11) **EP 0 985 987 B1**
(45) Date of publication and mention of the grant of the patent: **16.11.2005**
(21) Application number: 99307053.1
(22) Date of filing: 06.09.1999
(51) Int. Cl.: G05B 9/02, H03K 17/18

(54) **Switch control apparatus and method**
Verfahren und Vorrichtung zur Steuerung eines Schalters
Procédé et dispositif pour la commande d un interrupteur

(30) Priority: 11.09.1998 GB 9819911
(43) Date of publication of application: 15.03.2000
(73) Proprietor: Solartron Mobrey Limited, Wimborne, Dorset BH21 4EL (GB)
(72) Inventor: Smallwood, Timothy John, Farnham Common, Slough SL2 3QD (GB); Turner, Roy Colin, Maidenhead, Berks SL6 8DH (GB); Gunby, David, Cippenham, Slough, Berks SL1 4DL (GB); Da Silva Ribeiro Coelho, Luis Filipe, Cippenham, Slough, Berks SL1 4DL (GB)
(74) Representative: Vleck, Jan Montagu

(56) References cited:
- EP-A- 0 111 028
- EP-A- 0 508 314
- EP-A- 0 862 261
- DE-A- 19 653 727
- US-A- 4 742 422
- US-A- 4 771 357
- US-A- 5 216 352
- US-A- 5 347 864
- US-A- 5 559 438

## Description

The invention relates to a method of controlling a switch in a series circuit which also includes a power supply and a load, and to switch control apparatus for carrying out such a method.

There are many applications where a switch is provided which is operated in response to the sensing of a condition or the like so as to open or close accordingly. Closure of the switch will cause current to flow through the switch in a circuit in which the switch is positioned, the current flow causing activation of a load which will provide an indication that the switch has been closed. Typical loads include optical devices such as a tungsten filament and relays/contractors. Commercially, the switch will be provided internally of processing unit and will be connected to terminals provided for connection of a load and a supply by the user. A problem arises in that the user can inadvertently connect the supply across the terminals and omit the load altogether or may use a load which is incorrectly rated. In either event, when the switch is closed, the load and/or the unit can be damaged or even destroyed.

EP 0 862 261 describes an overcurrent protection circuit.

US 5 347 864 describes a liquid level measuring apparatus incorporating an error connection means which is controlled by the activation and deactivation of reed switches. The switches are wired together in parallel and are controlled by a magnet which rises and falls with the water level.

US 4 742 422 describes a self monitoring safety circuit. A current is fed into an additional winding of a total current converter, and the pulse voltage created is output to an electronic limit value circuit. The output of the electronic limit value circuit is out put to an evaluation circuit which causes the monitored circuit to be switched off when no periodic impulses arrive.

US 5 559 438 describes a composite safety switch. The description is directed to a mathematical discussion based on the arrangement of 2 to 4 switches in a either a parallel or series circuit. Failure detection of a switch occurs when a current is flowing through a circuit and a signal CS is in a state indicating that the switch should be closed.

DE 196 53 727 relates to the switching off of a drive motor.

EP 0 111 028 relates to a power transistor switch.

US 4, 771, 357 discloses switch control apparatus as set out in the preamble of claim 14.

The present invention provides method and apparatus as defined in claims 1 and 14 respectively. Preferred features of the invention are set out in dependent claims 2 to 13 and 15 to 10.

In preferred embodiments of this invention, we provide a method and apparatus in which the omission of a load or the use of an incorrectly rated load can be automatically detected and compensated for. Thus, if set (c) notes that the monitored current varies unacceptably from the threshold, this will indicate either the omission of the load or the use of an incorrectly rated load and the switch will be immediately opened preventing any damage.

The current could be monitored directly, but preferably step b) comprises generating a voltage equivalent to the monitored current, step c) comprising generating an equivalent reference voltage. It is possible that due to noise effects of fluctuating power supplies and the like, step (c) is carried out at a time when the reference is only transiently exceeded. Consequently, the method preferably further comprises e) repeating steps a) - d) after a predetermined interval.

Preferably, the predetermined interval is relatively long if the monitored current varies unacceptably from the reference current within a first predetermined period after step a). This first predetermined period is typically 3ms. This will correspond to the absence of a load. The predetermined interval will typically be several orders of magnitude greater than the predetermined period eg 1000 times, a preferred interval being 15 secs.

In addition, or alternatively, the predetermined interval may be relatively short if the monitored current varies unacceptably from the reference current within a second predetermined period after step a). Typically the second predetermined period commences upon completion of the first predetermined period.

The method will typically be carried out on each occasion on which the switch is closed.

Preferably, the method is carried out for a certain test period and is then terminated. The test period may be, for example, 100ms. The switch will remain closed assuming this is its current condition as determined by the controller to which it is attached, if the last few comparisons were satisfactory or at least one of them was satisfactory. The fact that there is a satisfactory comparison indicates that unsatisfactory comparisons are probably due to noise.

The unacceptable variation between the monitored current and the reference may occur if the current exceeds the reference. However, other relationships are possible. For example, when the current approaches within a certain range of the reference.

As will be apparent from the introduction, the invention is able to determine whether the user has connected an incorrect load or has connected the supply without a load. It is also possible that the remainder of the switch control apparatus could suffer a fault and the invention enables a distinction to be drawn between faults caused by the user and faults within the apparatus which a user cannot correct. Thus, if, following a method according to the invention, a fault is determined then a suitable indicator can be activated different from an indicator which is activated when another type of fault occurs.

Conveniently, however, the same indicator is used to indicate both types of fault, the method comprising activating the indicator in a first manner if the switch is opened in step d) as the result of step c); and activating the indicator in a second, different manner as a result of another type of fault developing. These different manners are conveniently turning the indicator device ON and OFF at respective different frequencies. The indicating device could also be used for indicating that the apparatus is switched ON or switched OFF.

An example of switch control apparatus and a method according to the invention will now be described with reference to the accompanying drawings, in which:-
Figure 1 is a circuit diagram of the apparatus; and,
Figure 2 is a graph illustrating exponential decaying current with time.

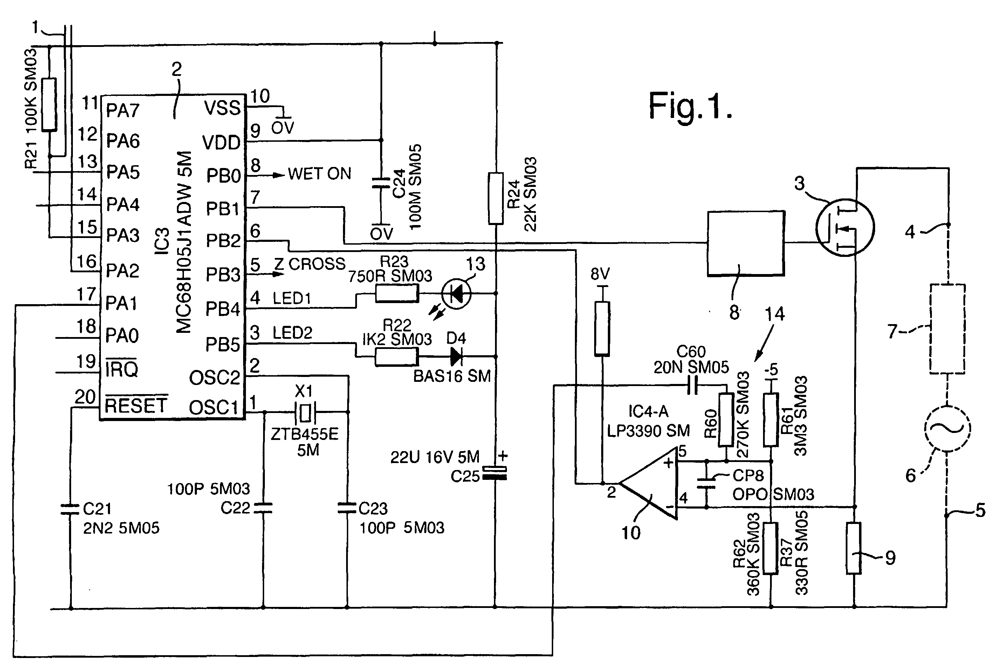

The circuit shown in Figure 1 is connected in use to a liquid level sensor (not shown) which provides an output signal on a line 1 which is fed in this example to a microprocessor 2. The liquid level sensor may have any conventional form and generates an output signal which varies depending upon whether or not a liquid has been sensed by the sensor. The microprocessor 2 is programmed to respond to this input to operate a switch 3 in the form of a FET so that an indication can be provided to the user.

The switch 3 is actuated via a port PB1 on the microprocessor 2 and interface circuits 8 of conventional form.

The circuit shown in solid lines in Figure 1 is provided as a unit to the user and terminates in a pair of terminals 4,5 presented to the user and to which the user is intended to connect a power supply 6 and a load, such as a tungsten filament 7. The power supply could take other forms, for example a transformer or the like, as could the load 7. As explained above, a problem can arise if the user connects the power supply 6 directly between the terminals 4,5 or uses a load 7 with the wrong rating.

In order to detect a problem in the components attached to the terminals 4,5, the current flowing through the series circuit defined by the terminals 4,5 and the switch 3 is monitored by monitoring the voltage drop across a resistor 9 when the switch 3 is closed by the microprocessor 2 in response to a corresponding signal from the liquid level sensor e.g. indicating that a liquid is sensed. This voltage drop is passed to the inverting input of a comparator 10, to the other input of which is fed a reference voltage supplied from the port PA1 of the microprocessor 2.

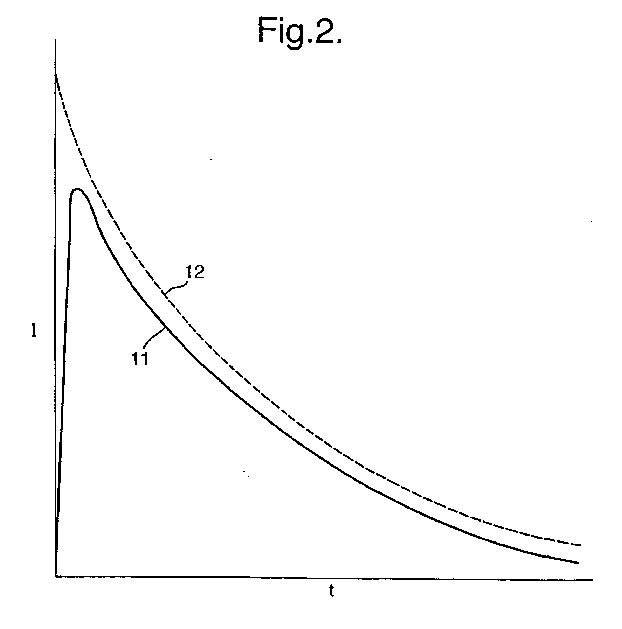

The reference signal supplied to the non-inverting input of the comparator 10 is controlled so as to take the form of the maximum signal which would be expected from monitoring the voltage drop across the resistor 9 when an acceptable load 7 is connected between the terminals 4,5. Typically, in the case of a tungsten lamp forming the load, this monitored signal will take the form shown by a solid line 11 in Figure 2, that is a rapid increase to a peak followed by an approximately exponential decay. Consequently, the reference generated by the microprocessor 2 and a network 14 will also have an approximately exponential form as shown by the dashed line 12 in Figure 2. If the load current exceeds the exponentially decaying reference voltage 12, the output of the comparator 10 will send an overload signal to the port PB2 of the microprocessor 2.

The microprocessor 2 monitors the output of comparator 10 at regular, short time intervals to determine if there is an overload and if such an overload exists, it will turn OFF the switch 3.

The action taken by the microprocessor 2 will vary depending upon the time at which an overload is sensed. Thus, for example, if an overload is sensed in a first predetermined period which is relatively soon after initiation (i.e. the time at which the switch is turned ON), for example about 3ms, then this is likely to indicate that no load 7 has been connected between the terminals 4,5 and the power source 6 has been connected directly between the terminals. In that event, the microprocessor 2 will turn OFF the switch 3 for a relatively long predetermined interval (for example 15 seconds) and will then repeat the monitoring process.

If an overload is not sensed in the first 100ms after start-up, the overload testing function will no longer operate until the switch 3 is next closed in accordance with the status of the liquid level sensor.

If the power supply is a DC supply, then once the overload condition is sensed, no further testing will be carried out until the 15 second time period as been exceeded. However, if an AC power supply is used (as shown) then the microprocessor 2 can carry out a more sophisticated process which can take account of the need for the tungsten load 7 to stabilize. Typically, if no overload is sensed in the first period of 3ms, then the microprocessor 2 will continue to monitor the voltage drop across the resistor 9 over the remaining 97ms (while the switch 3 remains ON) and if it detects an overload, it will turn OFF the switch 3 but turn it on again during the next half-cycle of the power supply 6. This process of successive tests is then continued with the switch being selectively turned OFF if an overload is sensed until completion of the 100ms period from start-up. The last few tests are then reviewed (typically the tests are carried out each half-cycle). For example if in the last four tests, at least one was satisfactory, then the switch 3 is maintained ON (assuming this is still the appropriate setting according to the liquid level sensor) on the basis that any unsatisfactory tests will have been due to transient effects.

Although Figure 2 shows an approximately exponentially decaying waveform 12, the reference waveform can be chosen depending upon the load expected between the terminals 4,5 and the switching capacity of the switch 3. In addition, the microprocessor 2 could be replaced by other circuitry as desired.

A conventional switch unit will include an LED to indicate whether the unit is ON or OFF. In this new unit as shown in Figure 1, however, an LED 13 is provided which not only provides the standard indication but provides other information. As can be seen, the LED 13 operates under the control of the microprocessor via port PB4 and is activated in the following manner:
(i) When the unit is operating normally and the load is ON, the LED is continuously lit.
(ii) When the unit is operating normally and the load is OFF, the LED flashes at one pulse per second.
(iii) When the load is short circuited or the unit is drawing too much power (customer wiring/site problem) the LED flashes at one pulse every four seconds.
(iv) If there is an internal electronics failure indicating that the unit should be returned to the manufacturer, the LED flashes at three pulses per second.
(v) If the device has not been calibrated, the LED flashes at one pulse every two seconds.

It will be appreciated that the flash rate can be chosen as desired.

This mode of operation makes use of the fact that a distinction can be made by the microprocessor 2 between a customer wiring/site problem (state iii) and an internal problem requiring the manufacturer to repair (state iv).

## Claims

1. A method of controlling a switch (3) in a series circuit which also includes a power supply (6) and a load (7), the method comprising:
a) closing the switch (3);
b) monitoring current flowing in the circuit;
c) comparing the monitored current with a reference which varies with time corresponding to the variation expected when an acceptable load is connected and,
d) opening the switch if the monitored current varies from the reference in an unacceptable manner, wherein the reference is independent of the opening of the switch.

2. A method according to claim 1, wherein step b) comprises generating a voltage equivalent to the monitored current, step c) comprising generating an equivalent reference voltage.

3. A method according to claim 1 or claim 2, further comprising:
e) repeating steps a) - d) after a predetermined interval.

4. A method according to claim 3, wherein the predetermined interval is relatively long if the monitored current varies unacceptably from the reference current within a first predetermined period after step a).

5. A method according to claim 4, wherein the first predetermined period is substantially three milliseconds.

6. A method according to claim 3 or claim 4, wherein the predetermined interval is relatively short if the monitored current varies unacceptably from the reference current within a second predetermined period after step a).

7. A method according to claim 6, wherein the second predetermined period commences upon completion of the first predetermined period.

8. A method according to any of the preceding claims, further comprising terminating the method after completion of a test period.

9. A method according to claim 8, wherein the test period is substantially 100 milliseconds.

10. A method according to any of the preceding claims, wherein the unacceptable variation occurs when the monitored current exceeds the reference.

11. A method according to any of the preceding claims, further comprising activating an indicator in a first manner if the switch is opened in step d) as the result of step c); and activating the indicator in a second, different manner as a result of another type of fault developing.

12. A method according to claim 11, wherein the indicator is an optical device, the first and second manners comprising turning the indicating device ON and OFF at respective different frequencies.

13. A method according to any preceding claim wherein the reference takes the form of a rapid increase to a peak followed by an approximately exponential decay.

14. Switch control apparatus for connection to a switch (3) connected in a series with a power supply (6) and a load (7), the apparatus comprising means (2, 9, 10) for monitoring current flowing in the circuit; a reference generator (2) for generating a reference which varies with time corresponding to the variation expected when a load is connected; a comparator (10) for comparing the monitored current with the reference; and a control system (2) responsive to the comparator (10) to open the switch (3) if the monitored current varies from the reference in an unacceptable manner, **characterised in that** the reference generator is independent of the control system.

15. Switch control apparatus according to claim 14, adapted to carry out a method according to any of claims 1 to 13.

16. Switch control apparatus according to claim 14 or claim 15 for use with a level sensor, the switch being operated normally in response to conditions sensed by the level sensor.

## Patentansprüche

1. Verfahren zum Steuern eines Schalters (3) in einer Reihenschaltung, die auch eine Stromversorgung (6) und eine Last (7) hat, wobei das Verfahren Folgendes umfasst:
a) Schließen des Schalters (3) ;
b) Überwachen des in der Schaltung fließenden stroms;
c) Vergleichen des überwachten Stroms mit einer Referenz, die entsprechend der Variation, die erwartet wird, wenn eine akzeptable Last angeschlossen ist, im Verhältnis zur Zeit variiert, und
d) Öffnen des Schalters, wenn der überwachte Strom unakzeptabel von der Referenz abweicht, wobei die Referenz vom Öffnen des Schalters unabhängig ist.

2. Verfahren nach Anspruch 1, bei dem der Schritt b) das Erzeugen einer mit dem überwachten Strom äquivalenten Spannung umfasst, wobei Schritt c) das Erzeugen einer äquivalenten Referenzspannung umfasst.

3. Verfahren nach Anspruch 1 oder Anspruch 2, das ferner Folgendes umfasst:
e) Wiederholen der Schritte a) bis d) nach einem vorbestimmten Intervall.

4. Verfahren nach Anspruch 3, bei dem das vorbestimmte Intervall relativ lang ist, wenn der überwachte Strom innerhalb eines ersten vorbestimmten Zeitabschnitts nach Schritt a) unakzeptabel von dem Referenzstrom abweicht.

5. Verfahren nach Anspruch 4, bei dem der erste vorbestimmte Zeitabschnitt im Wesentlichen drei Millisekunden beträgt.

6. Verfahren nach Anspruch 3 oder Anspruch 4, bei dem das vorbestimmte Intervall relativ kurz ist, wenn der überwachte Strom innerhalb eines zweiten vorbestimmten zeitabschnitts nach Schritt a) unakzeptabel von dem Referenzstrom abweicht.

7. Verfahren nach Anspruch 6, bei dem der zweite vorbestimmte Zeitabschnitt nach Abschluss des ersten vorbestimmten Zeitabschnitts beginnt.

8. Verfahren nach einem der vorhergehenden Ansprüche, das ferner das Beenden des Verfahrens nach Abschluss einer Prüfperiode umfasst.

9. Verfahren nach Anspruch 8, bei dem die Prüfperiode im Wesentlichen 100 Millisekunden beträgt.

10. Verfahren nach einem der vorhergehenden Ansprüche, bei dem die unakzeptable Abweichung stattfindet, wenn der überwachte Strom die Referenz überschreitet.

11. Verfahren nach einem der vorhergehenden Ansprüche, das ferner das Aktivieren eines Anzeigers auf eine erste Weise, wenn der Schalter in Schritt d) als Folge von Schritt c) geöffnet wird, und das Aktivieren des Anzeigers auf eine zweite, andere Weise infolge dessen, dass sich ein anderer Fehlertyp entwickelt, umfasst.

12. verfahren nach Anspruch 11, bei dem der Anzeiger eine optische vorrichtung ist, wobei die erste und die zweite Weise das EIN- und AUS-Schalten der Anzeigevorrichtung bei jeweiligen verschiedenen Frequenzen umfasst.

13. Verfahren nach einem der vorhergehenden Ansprüche, bei dem die Referenz die Form eines raschen Anstiegs auf eine Spitze gefolgt von einem ungefähr exponentiellen Ausschwingen hat.

14. Schaltersteuervorrichtung zum Verbinden mit einem Schalter (3), der mit einer Stromversorgung (6) und einer Last (7) in Reihe geschaltet ist, wobei die Vorrichtung Folgendes umfasst: Mittel (2, 9, 10) zum Überwachen von in der Schaltung fließendem Strom; einen Referenzerzeuger (2) zum Erzeugen einer Referenz, die entsprechend der Variation, die erwartet wird, wenn eine Last angeschlossen ist, im Verhältnis zur Zeit variiert; eine Vergleichsschaltung (10) zum vergleichen des überwachten Stroms mit der Referenz und ein auf die Vergleichsschaltung (10) reagierendes Steuersystem (2) zum Öffnen des Schalters (3), wenn der überwachte Strom unakzeptabel von der Referenz abweicht, **dadurch gekennzeichnet, dass** der Referenzerzeuger von dem Steuersystem unabhängig ist.

15. Schaltersteuervorrichtung nach Anspruch 14, die zum Durchführen eines Verfahrens nach einem der Ansprüche 1 bis 13 ausgeführt ist.

16. Schaltersteuervorrichtung nach Anspruch 14 oder Anspruch 15 zur Verwendung mit einem Pegelsensor, wobei der Schalter normalerweise in Reaktion auf von dem Pegelsensor erfasste Bedingungen betätigt wird.

## Revendications

1. Méthode de commande d'un commutateur (3) dans un circuit série qui comprend aussi une alimentation électrique (6) et une charge (7), la méthode comprenant:
a) fermer le commutateur (3)
b) contrôler le courant coulant dans le circuit;
c) comparer le courant contrôlé à une référence qui varie avec le temps correspondant à la variation prévue lorsqu'une charge acceptable est connectée, et
d) ouvrir le commutateur si le courant contrôlé varie de la référence d'une manière inacceptable, où la référence est indépendante de l'ouverture du commutateur.

2. Méthode selon la revendication 1, dans laquelle l'étape b) comprend générer une tension équivalente au courant contrôlé, l'étape c) comprend générer une tension de référence équivalente.

3. Méthode selon la revendication 1 ou la revendication 2, comprenant en outre:
e) répéter les étapes a) - d) après un intervalle prédéterminé.

4. Méthode selon la revendication 3, dans laquelle l'intervalle prédéterminé est relativement long si le courant contrôlé varie d'une manière inacceptable du courant de référence au cours d'une première période prédéterminée après l'étape a).

5. Méthode selon la revendication 4, dans laquelle la première période prédéterminée est sensiblement de trois millisecondes.

6. Méthode selon la revendication 3 ou la revendication 4, dans laquelle l'intervalle prédéterminé est relativement court si le courant contrôlé varie d'une manière inacceptable du courant de référence au cours d'une deuxième période prédéterminée après l'étape a).

7. Méthode selon la revendication 6, dans laquelle la deuxième période prédéterminée commence à l'achèvement de la première période prédéterminée.

8. Méthode selon l'une quelconque des revendications précédentes, comprenant en outre le fait de terminer la méthode après l'achèvement d'une période de test.

9. Méthode selon la revendication 8, dans laquelle la période de test est sensiblement de 100 millisecondes.

10. Méthode selon l'une quelconque des revendications précédentes, dans laquelle la variation inacceptable survient lorsque le courant contrôlé dépasse la référence.

11. Méthode selon l'une quelconque des revendications précédentes, comprenant en outre activer un indicateur d'une première manière si le commutateur est ouvert à l'étape d) suite à l'étape c); et activer l'indicateur d'une deuxième manière différente suite à un autre type de faute qui se développe.

12. Méthode selon la revendication 11, dans laquelle l'indicateur est un dispositif optique, les première et deuxième manières comprenant mettre le dispositif indicateur EN CIRCUIT et HORS CIRCUIT aux différentes fréquences respectives.

13. Méthode selon l'une quelconque des revendications précédentes, dans laquelle la référence prend la forme d'une augmentation rapide jusqu'à un pic, suivie par une décroissance approximativement exponentielle.

14. Appareil de commande de commutateur destiné à être connecté à un commutateur (3) connecté en série à une alimentation électrique (6) et à une charge (7), l'appareil comprenant des moyens (2, 9,10) pour contrôler le courant coulant dans le circuit; un générateur de référence (2) pour générer une référence qui varie avec le temps correspondant à la variation prévue lorsqu'une charge est connectée; un comparateur (10) pour comparer le courant contrôlé à la référence; et un système de commande (2) sensible au comparateur (10) pour ouvrir le commutateur (3) si le courant contrôlé varie de la référence d'une manière inacceptable, **caractérisé en ce que** le générateur de référence est indépendant du système de commande.

15. Appareil de commande de commutateur selon la revendication 14, adapté pour exécuter une méthode selon l'une quelconque des revendications 1 à 13.

16. Appareil de commande de commutateur selon la revendication 14 ou la revendication 15, à utiliser avec un capteur de niveau, le commutateur étant normalement actionné en réponse à des conditions détectées par le capteur de niveau.
